# EUROPEAN PATENT APPLICATION

(11) **EP 3 279 357 A1**
(43) Date of publication of application: **07.02.2018**
(21) Application number: 16772443.4
(22) Date of filing: 22.03.2016
(51) Int. Cl.: C22C 38/00, C22C 38/34, C22C 38/54

(54) **HEAT-TREATED STEEL WIRE HAVING EXCELLENT FATIGUE-RESISTANCE CHARACTERISTICS**

(30) Priority: 31.03.2015 JP 2015070531
(71) Applicant: Kabushiki Kaisha Kobe Seiko Sho (Kobe Steel, Ltd.), Kobe-shi, Hyogo 651-8585 (JP)
(72) Inventor: OURA, Hiroshi, Hyogo 657-0863 (JP); MASUDA, Tomokazu, Hyogo 657-0863 (JP)
(74) Representative: Müller-Boré & Partner Patentanwälte PartG mbB
(86) International application number: PCT/JP2016/058959
(87) International publication number: WO 2016/158562

(57) **Abstract**

To provide a heat-treated steel wire having excellent fatigue-resistance characteristics. The heat-treated steel of the present invention has a predetermined chemical composition, with the balance being iron and inevitable impurities, wherein the heat-treated steel wire includes, in a tempered martensite structure at a depth of 0.3 mm from a surface layer: Cr based carbides having a circle equivalent diameter of 0.1 µm or more and less than 0.3 µm in 0.20 particles/µm² or less, Cr based carbides having a circle equivalent diameter of 0.3 µm or more and less than 0.7 µm in 0.002 particles/µm² or less, and Cr based carbides having a circle equivalent diameter of 0.7 µm or more in 0.0010 particles/µm² or less, and wherein the amount of residual austenite exceeds 5% and 15% or less in terms of a volume ratio.

## Description

### Technical Field

The present invention relates to a heat-treated steel wire, and more particularly to a heat-treated steel wire having excellent fatigue-resistance characteristics.

### Background Art

With weight reduction of automobiles and output power increase of automobile engines, various springs used in engines, clutches, fuel injection systems and the like are required to be used under higher stress. Particularly, with the increase of loading stress to the spring, there is a need to develop a spring with fatigue-resistant characteristics, namely, fatigue failure due to internal defects hardly occurs. An oil-tempered wire (hereinafter may be referred to as the "heat-treated steel wire") is used in these valve spring and clutch spring.

The structure of the heat-treated steel wire consists mainly of a tempered martensite structure and therefore easily ensures high strength, and also has an advantage that it is excellent in fatigue strength and sagging resistance. However, the structure of the heat-treated steel wire has a drawback that toughness and ductility are degraded with the increase of the strength. Therefore, breakage easily occurs due to internal defects such as inclusions in a steel material, thus causing a new problem such as degradation of fatigue-resistant characteristics.

There have hitherto been proposed the following techniques to these problems.

Patent Document 1 discloses a steel wire for a spring, comprising a predetermined amount of C, Si, Mn, Mo, and Cr, wherein a tensile strength is 1,900 to 2,350 MPa, a reduction of area is 35% or more, Mo carbide precipitates have a size of 0.2 µm or less, the content of residual austenite is 5% by volume or less, and a surface roughness Rz is 14 µm or less. This technique reduces an influence at high temperature to thereby improve the fatigue limit, thus obtaining a steel wire for a spring, which can undergo a nitriding treatment at high temperature.

Patent Document 2 discloses a high toughness oil-tempered wire for a spring, having a predetermined chemical composition, wherein a volume ratio of residual austenite is 1 to 5%. According to this technique, an oil-tempered wire for a spring with high strength and high toughness is obtained without degrading sagging resistance during use of a spring.

### Prior Art Document

### Patent Document

Patent Document 1: JP 2001-247934 A
Patent Document 2: JP 9-71843 A

### Disclosure of the Invention

### Problems to be Solved by the Invention

For example, in Patent Document 1, the addition of expensive elements such as Mo leads to high manufacturing cost. The amount of austenite defined in Patent Document 2 cannot ensure sufficient hardness because of small increase in hardness obtained by deformation-induced martensitic transformation that occurs during spring working, thus leaving a room for improvement in spring strength.

The present invention has been made in light of the foregoing circumstance, and it is an object of the present invention to provide a heat-treated steel wire having excellent fatigue-resistant characteristics.

### Means for Solving the Problems

The present invention that can solve the foregoing problems provides a heat-treated coil spring including, in % by mass: C: 0.5 to 0.8%, Si: 1.0 to 2.50%, Mn: 0.5 to 1.5%, P: more than 0% and 0.02% or less, S: more than 0% and 0.02% or less, Cr: 0.3 to 0.7%, V: 0.05 to 0.5%, Al: more than 0% and 0.01% or less, N: more than 0% and 0.007% or less, and O: more than 0% and 0.004% or less, with the balance being iron and inevitable impurities, wherein the heat-treated steel wire includes, in a tempered martensite structure at a depth of 0.3 mm from a surface layer: Cr based carbides having a circle equivalent diameter of 0.1 µm or more and less than 0.3 µm in 0.20 particles/µm² or less, Cr based carbides having a circle equivalent diameter of 0.3 µm or more and less than 0.7 µm in 0.002 particles/µm² or less, and Cr based carbides having a circle equivalent diameter of 0.7 µm or more in 0.0010 particles/µm² or less, and wherein the amount of residual austenite more than 5% and 15% or less in terms of a volume ratio.

Further, in a preferred embodiment, the above-mentioned coil spring includes: in % by mass, at least one of the following (a) and (b):
(a) Ni: more than 0% and 0.3% or less, and
(b) B: more than 0% and 0.01% or less.

A spring obtained by using the above-mentioned heat-treated steel wire is also included in the present invention.

### Effects of the Invention

The present invention can provide a heat-treated steel wire having excellent fatigue-resistant characteristics by defining the composition of the heat-treated steel wire, inclusions in a structure, and the structure. When using the heat-treated steel wire of the present invention, a spring having excellent fatigue-resistant characteristics can be provided.

### Brief Description of the Drawings

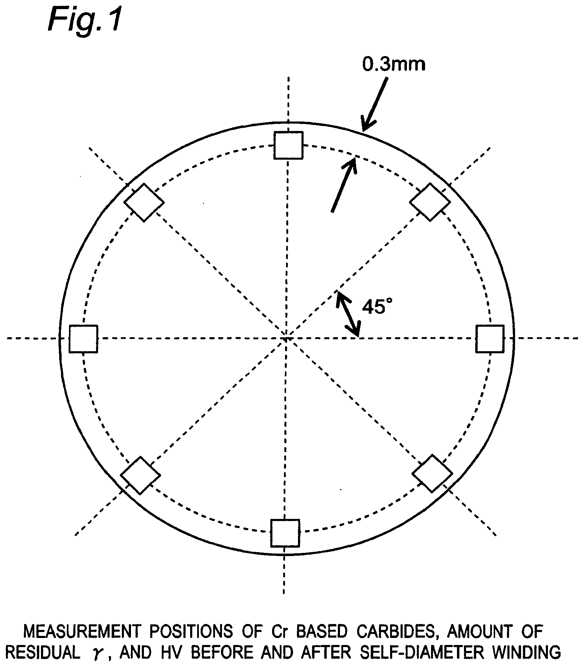

Fig. 1 is a schematic explanatory diagram of measurement positions of Cr based carbides in Examples.

### Mode for Carrying Out the Invention

It has been known that there is a need for a heat-treated steel wire, which is required to achieve high fatigue strength, to reduce internal defects, namely, inclusions which are inherent in a steel material and serve as a starting point of fatigue failure as much as possible, and that the generation of wire breakage and fatigue breakage due to inclusions can be reduced by appropriately controlling the inclusions.

Thus, the inventors have studied from various perspectives to obtain a heat-treated steel wire having excellent fatigue-resistance characteristics. As a result, they have found that control of Cr based carbides in a tempered martensite structure is effective to control fatigue failure due to internal defects.

If hard and coarse Cr based carbides exist in the martensite structure, an interface between the Cr based carbides and a base material serves as a propagation path of fatigue crack, and thus Cr based carbides may cause reduction of fatigue life. The inventors considered that control of the size and the number of Cr based carbides is effective to suppress propagation of fatigue crack.

When the heat-treated steel wire is further worked to produce a spring, a surface treatment such as nitriding treatment or shot peening is applied. When taking this point into consideration, the inventors considered that inclusions at a depth of 0.3 mm from a surface layer of the heat-treated steel wire easily serve as a starting point of fatigue failure, and thus a study was made on Cr based carbides at a depth of 0.3 mm from a surface layer of the heat-treated steel wire.

As a result, the inventors have found it important that the precipitate size and the number density at a circle equivalent diameter of Cr based carbides at a depth of 0.3 mm from a surface layer of the heat-treated steel wire satisfy the following conditions:
Cr based carbides having a size of 0.1 µm or more and less than 0.3 µm: 0.20 particles/µm² or less,
Cr based carbides having a size of 0.3 µm or more and less than 0.7 µm: 0.002 particles/µm² or less, and
Cr based carbides having a size of 0.7 µm or more: 0.0010 particles/µm² or less.

In the present invention, the gist is that Cr based carbides also include, in addition to Cr carbides, Cr carbonitrides, and composite carbides or composite carbonitride with carbide forming elements such as V.

The inventors also have found it important to define the amount of residual austenite after quenching and tempering to obtain a high-strength heat-treated steel wire with a tensile strength of 2,100 MPa or more, thus completing the present invention.

The reason for defining inclusions, structures, and compositions will be described in detail below.

It is a final object of the present invention to enhance, as fatigue-resistant characteristics, fatigue-resistant characteristics of a spring. To achieve the object, there is a need that a heat-treated steel wire used to produce the spring is also excellent in fatigue-resistant characteristics. From such a viewpoint, an attempt to improve fatigue-resistant characteristics of then heat-treated steel wire is made. In the present invention, hereinafter, fatigue-resistant characteristics of the spring and fatigue-resistant characteristics of the heat-treated steel wire may be simply referred to as the "fatigue-resistant characteristics".

### [Cr based carbides having a circle equivalent diameter of 0.1 µm or more and less than 0.3 µm: 0.20 particles/µm² or less]

Fine Cr based carbides having a circle equivalent diameter of 0.1 µm or more and less than 0.3 µm easily serve as a propagation path of fatigue crack and, when the amount of the fine Cr based carbides increases, fatigue strength is degraded. Therefore, the smaller the number of Cr based carbides having a circle equivalent diameter within the above range becomes, the better, and the number density is 0.20 particles/µm² or less, preferably 0.15 particles/µm² or less, more preferably 0.12 particles/µm² or less, and most preferably 0 particles/µm².

### [Cr based carbides having a circle equivalent diameter of 0.3 µm or more and less than 0.7 µm: 0.002 particles/µm² or less]

Cr based carbides having a circle equivalent diameter of 0.3 µm or more and less than 0.7 µm not only serve as a propagation path of fatigue crack, but also serve as a starting point of fatigue failure, thus exerting a large influence on the fatigue strength. Therefore, the smaller the number of Cr based carbides having a circle equivalent diameter within the above range becomes, the better, and the number density is 0.002 particles/µm² or less, preferably 0.0015 particles/µm² or less, and still more preferably 0.001 particles/µm² or less, and most preferably 0 particles/µm².

### [Cr based carbides having a circle equivalent diameter of 0.7 µm or more: 0.0010 particles/µm² or less]

Cr based carbides having a circle equivalent diameter of 0.7 µm or more easily serve as a propagation path of fatigue crack and a starting point of fatigue failure, thus significantly degrading the fatigue strength. The Cr based carbides can also cause coiling breakage during spring forming. Therefore, the smaller the number of Cr based carbides having a circle equivalent diameter within the above range becomes, the better, and the number density is 0.0010 particles/µm² or less, preferably 0.0005 particles/µm² or less, and most preferably 0 particles/µm².

### [Amount of residual austenite of more than 5% and 15% or less in terms of volume ratio]

In the present invention, the Cr content is reduced than heretofore to suppress the above-mentioned Cr based carbides. With the reduction of the Cr content, softening resistance, namely, heat resistance is also degraded, so that hardness is degraded by a heat treatment such as stress relief tempering or nitriding treatment after spring working, thus making it difficult to increase the strength of the spring. Thus, in the present invention, a predetermined amount of residual austenite is allowed to exist in a heat-treated steel wire, whereby, residual austenite is transformed into deformation-induced martensite during spring working, thus increasing the strength of the spring. To obtain such effect, the amount of residual austenite is more than 5%, preferably 7% or more, and more preferably 8% or more, in terms of a volume ratio, relative to the whole metal structure. Meanwhile, when the amount of residual austenite is too large, hardness during quenching may be lacking, so that the amount is 15% or less, preferably 13% or less, and more preferably 12% or less.

Next, a description will be made of the chemical composition in a steel used for the heat-treated steel wire according to the present invention.

### [C: 0.5 to 0.8%]

Carbon (C) is an element that is effective in improving the strength and sagging resistance of the spring. To effectively exhibit these effects, the C content is 0.5% or more, preferably 0. 55% or more, and more preferably 0.6% or more. With the increase of the C content, the strength and sagging resistance of the spring are improved. Any excessive C content, however, causes precipitation of a large amount of coarse cementite, thus exerting an adverse influence on spring workability and spring characteristics. Therefore, the C content is 0.8% or less, preferably 0.75% or less, and more preferably 0.70% or less.

### [Si: 1.0 to 2.50%]

Silicon (Si) is an element that is effective in improving deoxidation of the steel and the strength of the spring. To effectively exhibit these effects, the Si content is 1.0% or more, preferably 1.2% or more, and more preferably 1.4% or more. Any excessive Si content, however, not only causes hardening of the material, but also degrades ductility and toughness, and may increase the amount of decarburization of a surface, thus degrading fatigue-resistant characteristics. Therefore, the Si content is 2.50% or less, preferably 2.4% or less, and more preferably 2.3% or less.

### [Mn: 0.5 to 1.5%]

Manganese (Mn) serves to fix, in the steel, sulfur (S) to thereby convert it into MnS, and also enhances hardenability to thereby contribute to the improvement of the spring strength. To effectively exhibit these effects, the Mn content is 0.5% or more, preferably 0.6% or more, and more preferably 0.7% or more. Any excessive Mn content, however, excessively improves hardenability, and thus supercooled structures such as martensite and bainite are easily formed. Therefore, the Mn content is 1.5% or less, preferably 1. 4% or less, and more preferably 1.3% or less.

### [P: more than 0% and 0.02% or less]

Phosphor (P) segregates in the prior austenite grain boundary to thereby cause embrittlement of the structure, leading to degradation of fatigue-resistant characteristics. Therefore, the P content is 0.02% or less, and preferably 0.018% or less. The lower the P content is, the better, and there are manufacturing difficulties in control of the P content to zero and approximately 0.003% of P may be included as inevitable impurities.

### [S: more than 0% and 0.02% or less]

Sulfur (S) segregates in the prior austenite grain boundary to thereby cause embrittlement of the structure, leading to degradation of fatigue-resistant characteristics. Therefore, the S content is 0.02% or less, and preferably 0.015% or less. The lower the S content is, the better, and there are manufacturing difficulties in control of the S content to zero and approximately 0.003% of S may be included as inevitable impurities.

### [Cr: 0.3 to 0.7%]

Chromium (Cr) has not only the effect of improving hardenability to thereby improve the spring strength, but also the effect of decreasing the activity of carbon (C) to thereby prevent decarburization during rolling and a heat treatment. To effectively exhibit these effects, the Cr content is 0.3% or more, preferably 0.35% or more, and more preferably 0.4% or more. Meanwhile, the increase of the Cr content leads to the increase of Cr based carbides in the steel, thus degrading fatigue-resistant characteristics of the spring. Therefore, the Cr content is 0.7% or less, preferably 0.65% or less, and more preferably 0.6% or less.

### [V: 0.05 to 0.5%]

Vanadium (V) has the function of making crystal grains finer during hot-rolling, and a quenching and tempering treatment to thereby improve ductility and toughness. V causes secondary precipitation hardening during stress relief tempering after spring forming, thus contributing to the improvement of the strength of the spring. To exert these effects, the V content is 0.05% or more, preferably 0.10% or more, and more preferably 0.15% or more. Meanwhile, when the V content is large, the amount of composite carbides of Cr and V increases, thus degrading the fatigue strength of the spring. Therefore, the V content is 0.5% or less, preferably 0.40% or less, and more preferably 0.35% or less.

### [Al: more than 0% and 0.01% or less]

Aluminum (Al) forms inclusions, such as Al₂O₃ and AlN in the steel. These inclusions drastically degrade the fatigue life of the spring. Therefore, the Al content is 0.01% or less, and preferably 0.005% or less.

### [N: more than 0% and 0.007% or less]

Nitrogen (N) is combined with Al to form inclusions, such as AlN. AlN inclusions drastically degrade the fatigue life of the spring. N accelerates aging embrittlement during wire drawing, thus making secondary working difficult. Therefore, the N content is 0.007% or less, and preferably 0.005% or less.

### [O: more than 0% and 0.004% or less]

Any excessive oxygen (O) content forms coarse non-metallic inclusions, thus degrading the fatigue strength. Therefore, the O content is 0.004% or less, and preferably 0.003% or less.

Basic components of the heat-treated steel wire of the present invention are as mentioned above, and the balance is substantially iron. As a matter of course, it is permitted to include inevitable impurities, such as Ca and Na, which are inevitably mixed depending on materials, such as iron raw materials (including scraps) and auxiliary materials, manufacturing facility and the like.

The steel material of the present invention may further include at least Ni or B, as appropriate, and the characteristics of the heat-treated steel wire can be further improved depending on the kinds and contents of included elements. The reason for setting a preferable range when including these elements is as follows.

### [Ni: more than 0% and 0.3% or less]

Nickel (Ni) has the effect of suppressing decarburization during hot-rolling and improving corrosion resistance. To effectively exhibit these effects, the Ni content is preferably 0.05% or more, and more preferably 0.1% or more. Meanwhile, when the Ni content is large, not only Ni is inferior in terms of cost, but also hardenability is excessively improved, leading to formation of supercooled structures such as martensite and bainite, thus degrading the sagging resistance of the spring. Therefore, the Ni content is preferably 0.3% or less, more preferably 0.25% or less, and still more preferably 0.2% or less.

### [B: more than 0% and 0.01% or less]

B has the function of improving hardenability and cleaning austenite crystal grain boundary, thus improving toughness and ductility. To effectively exert these effects, the B content is preferably 0.001% or more, more preferably 0.0015% or more, and still more preferably 0.002% or more. Meanwhile, any excessive B content generates precipitation of composite compounds of Fe and B, which may cause cracking during hot-rolling. Hardenability is excessively improved, and thus supercooled structures such as martensite and bainite are easily formed. Therefore, the B content is preferably 0.01% or less, more preferably 0.008% or less, and still more preferably 0.006% or less.

The manufacturing method of the heat-treated steel wire of the present invention is not particularly limited, and known manufacturing can be employed. For example, a steel billet obtained by subjecting a steel material having the above-mentioned chemical component to melting and blooming is hot-rolled into a wire rod having a diameter of approximately 5.0 to 8.0 mm and coiled into a coil shape, followed by cooling. Thereafter, a shaving treatment of removing flaw and a decarburized portion of a surface layer of a steel wire rod (hereinafter may be referred to as the "rolled wire rod") is carried out. After subjecting to a softening treatment for example using high-frequency or a patenting treatment, the wire rod is drawn into one having a desired wire diameter, for example, a diameter of approximately 3 to 4 mm, in the case of a wire for a valve spring. The thus obtained wire rod which is drawn is subjected to a quenching and tempering treatment called oil tempering to obtain a heat-treated steel wire. Various springs such as valve spring and clutch spring are obtained by forming the heat-treated steel wire thus obtained into a spring shape.

In the present invention, to control the precipitate size and the number of Cr based carbides in the tempered martensite structure, there is a need to control, in addition to the heating temperature and the rolling temperature during blooming, patenting treatment conditions in secondary working, and heat treatment conditions of a quenching and tempering treatment after a wire drawing treatment.

For example, a steel ingot satisfying the above predetermined chemical composition is melted in a blast furnace and the thus obtained ingot is bloomed to fabricate a billet having a predetermined size. In the blooming step, to sufficiently solid-solute Cr based carbides, there is a need to heat the billet to 1,200°C or higher, more preferably 1,220°C or higher, and still more preferably 1,230°C or higher, before blooming. The more the billet is heated to higher temperature, Cr based carbides can be solid-soluted, so that the upper limit of the heating temperature is not particularly limited. Taking the heat-resistant temperature of the heating furnace into consideration, the upper limit of the heating temperature is 1,250°C or lower, and preferably 1,240°C or lower.

In the rolling step, the billet is hot-rolled at a desired reduction ratio to form a wire rod having a desired wire rod diameter. In the rolling step, rolling is desirably performed at low temperature to suppress the formation and growth of Cr based carbides. The rolling temperature is preferably 950°C or lower, and more preferably 900°C or lower, and is preferably 750°C or higher, and more preferably 800°C or higher.

After hot-rolling, control cooling must be performed. To suppress the formation and growth of Cr based carbides in the cooling process after hot-rolling and to suppress the generation of supercooling structures such as bainite and martensite, and excessive decarburization, there is a need to appropriately cool the rolled wire rod. Specifically, the placing temperature when placing on a cooling conveyor after coiling the rolled wire rod, namely, the temperature of coiling of the rolled rod is 750°C or higher, preferably 780°C or higher, and more preferably 800°C or higher, and 950°C or lower, preferably 920°C or lower, and more preferably 900°C or lower.

In a temperature range from starting of cooling after placing on the conveyor to finishing of pearlite transformation, namely, the average cooling rate up to 600°C is set at 1.0°C/second or more, and preferably 2°C/second or more, and 6°C/second or less, preferably 5°C/second or less, and more preferably 4°C/second or less. Then, the average cooling rate to 300°C is set at 4°C/second or more, and preferably 5°C/second or more, and 10°C/second or less, and preferably 9°C/second or less. By controlling the cooling rate in this way, the formation and growth of Cr based carbides can be suppressed and a pearlite structure suited for a secondary working treatment can be formed.

The cooling rate can be controlled, for example, by appropriately combining a rolling speed of the wire rod, a conveyor speed, blower cooling, cover cooling and the like. The above temperature can be measured by a radiation thermometer provided at plural positions on the conveyor.

After performing a shaving treatment for removal of a decarburized layer, flaw and the like of a surface layer of the rolled wire rod, and a patenting treatment for obtaining a pearlite structure, the wire rod is drawn into one having a desired wire diameter. The pearlite structure is obtained by controlling heating conditions during patenting. Particularly, to suppress coarse undissolved Cr based carbides, the heating temperature during patenting is set at 850°C or higher, preferably 870°C or higher, and more preferably 890°C or higher, and preferably 950°C or lower, and more preferably 930°C or lower. The holding time at the heating temperature is 10 seconds or more, preferably 15 seconds or more, and more preferably 20 seconds or more, and 60 seconds or less, preferably 55 seconds or less, and more preferably 50 seconds or less. The average cooling rate is 1.0°C/second or more, preferably 2.0°C/second or more, 6°C/second or less, and preferably 5°C/second or less. By performing such control cooling, a pearlite structure suited for the subsequent step is obtained.

The drawn wire rod is subjected to a quenching and tempering treatment. To suppress coarse undissolved Cr based carbides generated due to insufficient heating, the heating temperature during quenching is 850°C or higher, preferably 870°C or higher, and more preferably 890°C or higher. Meanwhile, when residual austenite crystal grains are coarsened to GS#10 or less, toughness and ductility are degraded. Therefore, from the viewpoint of suppressing coarsening of the residual austenite crystal grains, the heating temperature is 950°C or lower, preferably 930°C or lower, and more preferably 910°C or lower. The holding time at the heating temperature is 10 seconds or more, preferably 15 seconds or more, and more preferably 20 seconds or more, and 60 seconds or less, preferably 55 seconds or less, and more preferably 50 seconds or less. After holding for a predetermined time, quenching is performed using oil heated to approximately 50 to 60°C, and tempering is appropriately adjusted to achieve the tensile strength of 2,100 MPa or more. For example, tempering is performed at the heating temperature of 350°C or higher and 450°C or lower, and the holding time at the heating temperature is set at 30 seconds or more and 150 seconds or less. By performing such treatment, a heat-treated steel wire having a desired tensile strength and including more than 5% and 15% or less of residual austenite is obtained.

The heat-treated steel wire of the present invention exhibits excellent fatigue-resistant characteristics as shown in Examples mentioned later. The heat-treated steel wire of the present invention can be formed into various springs with the desired coil diameter, free height, and number of turns, such as valve spring, clutch spring, engine spring, and transmission spring. Known various treatments such as nitriding treatment and vacuum carburizing treatment can be applied, as appropriate, when processing the heat-treated steel wire.

This application claims priority based on Japanese Patent Application 2015-070531 filed on March 31, 2015, the disclosure of which is incorporated by reference herein.

### Examples

While the present invention will be more specifically described below by way of Examples, it is to be understood that the present invention is not limited to the examples, and various design variations made in accordance with the purports mentioned hereinbefore and hereinafter are also included in the scope of the present invention.

A steel ingot (150 kg) having the chemical compositions shown in Table 1 was melted in a portable vacuum melting furnace, heated at the temperature simulating the blooming temperature shown in Table 2, and then subjected to cogging, thereby fabricating steel billet of 155 mm square. The thus obtained steel billets were hot-rolled, followed by controlling the placing temperature, the cooling rate to 600°C after coiling (mentioned as the "cooling rate I" in the table), and the cooling rate to 300°C (mentioned as the "cooling rate II" in the table) as shown in Table 2, thus fabricating a rolled wire rod having a wire diameter of 8.0 mm. The thus obtained rolled wire rod was subjected to a shaving treatment to remove a decarburized layer, flaw and the like of a surface layer, subjected to a patenting treatment under the conditions shown in Table 2 to form a pearlite structure, and then subjected to the cold drawing into one having a wire diameter of 4.0 mm.

Subsequently, a quenching and tempering treatment was performed under the conditions shown in Table 2. In that case, the tempering treatment was carried out to achieve the tensile strength of 2,100 to 2,150 MPa, thus fabricating a heat-treated steel wire.

The tensile strength, reduction of area, Cr based carbides, residual γ, and fatigue strength were measured by the following procedures. The results are shown in Table 3.

### [Tensile Strength, Reduction of Area]

Using an autograph (manufactured by Shimadzu Corporation), a tensile test was performed at a gauge length of 200 mm and a strain rate of 20 mm/min, and then the tensile strength was measured and the reduction of area was measured from fracture geometry. It was judged that samples having the reduction of area of 45% or more are excellent in toughness and ductility.

### [Cr Based Carbides]

Using a field emission scanning electron microscope (FE-SEM) and an energy dispersive X-ray (EDX) analyzer, measurement was made of Cr based carbides in a tempered martensite structure. A steel wire was cut at a cross section vertical to an axis thereof (hereinafter referred to as the "cross section") and the cut wire was embedded in a hot mounting resin, and then subjected to paper polishing, buffing, and etching in this order. Using 5% picric acid/95% ethanol as etchant, a precipitate was developed. Using FE-SEM, each position at a depth of 0.3 mm from a surface layer of the steel wire in the cross section was observed at 45° intervals (area of 275 µm², 2,200 µm² in total) as shown in Fig. 1. The observation was performed under the conditions of a magnification of 10,000 times, an acceleration voltage of 20 kV, and a current of 0.1 nA. Using EDX, carbides, carbonitrides, composite carbides, and composite carbonitrides were identified, and ones including 10% by mass or more of Cr among elements excluding Fe were regarded as Cr based carbides. Measurement of Cr based carbides was performed by the following procedure. Using image processing software (Image Pro Plus, manufactured by Media Cybernetics, Inc.), quantitative analysis of Cr based carbides having a circle equivalent diameter of 0.1 µm or more was performed, and each number of Cr based carbides having a circle equivalent diameter of 0.1 µm or more and less than 0.3 µm, Cr based carbides having a circle equivalent diameter of 0.3 µm or more and less than 0.7 µm, and Cr based carbides having a circle equivalent diameter of 0.7 µm or more was calculated, and then the number of Cr based carbides per 1 µm² and an average were calculated.

### [Residual γ]

Using a two-dimensional minute part X-ray diffraction apparatus, the amount of residual γ was measured under analysis conditions shown in Table 4, and a volume ratio was calculated. The effect of the residual γ was evaluated by a measured value ΔHV of the increase in hardness before and after self-diameter winding. It was judged that, when ΔHV is 50 or more, a high-strength spring was obtained by the increase in hardness during coiling.

### [Fatigue Strength]

Fatigue strength was evaluated by performing a Nakamura-type rotating-bending fatigue test. A heat-treated steel wire after performing a quenching and tempering treatment was subjected to shot peening to thereby impart compression residual stress to a surface layer of the steel wire, followed by stress relief tempering at 220°C for 20 minutes, thus fabricating specimens. A rotating-bending test was started from a loading stress of 1,000 MPa. The stress where a rotation number reaches fifty million times without breakage of all five specimens was regarded as the fatigue strength. When breakage occurred in inclusions, the rotating-bending test was carried out by gradually decreasing the loading stress to 950 MPa, 900 MPa ···. Specimens in which the fatigue strength is 900 MPa or more were rated "Pass".

**[Table 1]**

| Test No. | Steel type | C | Si | Mn | P | S | Cr | V | Al | N | O | Ni | B |
|---|---|---|---|---|---|---|---|---|---|---|---|---|---|
| 1 | A | 0.62 | 1.88 | 0.66 | 0.015 | 0.005 | 0.34 | 0.12 | 0.003 | 0.0033 | 0.0025 | 0.22 | 0.0033 |
| 2 | B | 0.54 | 2.10 | 0.56 | 0.012 | 0.008 | 0.64 | 0.26 | 0.002 | 0.0041 | 0.0033 | | |
| 3 | C | 0.55 | 2.25 | 0.70 | 0.009 | 0.007 | 0.53 | 0.44 | 0.003 | 0.0032 | 0.0016 | 0.17 | |
| 4 | D | 0.67 | 1.72 | 0.94 | 0.013 | 0.010 | 0.38 | 0.18 | 0.003 | 0.0051 | 0.0030 | | |
| 5 | E | 0.71 | 1.65 | 0.93 | 0.019 | 0.008 | 0.68 | 0.22 | 0.007 | 0.0045 | 0.0027 | 0.20 | 0.0048 |
| 6 | F | 0.63 | 1.91 | 1.07 | 0.018 | 0.007 | 0.47 | 0.26 | 0.003 | 0.0037 | 0.0022 | | |
| 7 | G | 0.66 | 1.80 | 0.73 | 0.010 | 0.007 | 0.58 | 0.28 | 0.001 | 0.0041 | 0.0025 | | |
| 8 | H | 0.59 | 2.41 | 1.39 | 0.015 | 0.009 | 0.43 | 0.37 | 0.000 | 0.0038 | 0.0015 | 0.25 | |
| 9 | I | 0.75 | 1.59 | 0.82 | 0.013 | 0.011 | 0.65 | 0.26 | 0.002 | 0.0042 | 0.0031 | | 0.0027 |
| 10 | J | 0.66 | 1.84 | 1.27 | 0.015 | 0.007 | 0.58 | 0.31 | 0.004 | 0.0027 | 0.0028 | 0.11 | 0.0033 |
| 11 | A | 0.62 | 1.88 | 0.66 | 0.015 | 0.005 | 0.34 | 0.12 | 0.003 | 0.0033 | 0.0025 | 0.22 | 0.0033 |
| 12 | B | 0.54 | 2.10 | 0.56 | 0.012 | 0.008 | 0.64 | 0.26 | 0.002 | 0.0041 | 0.0033 | | |
| 13 | B | 0.54 | 2.10 | 0.56 | 0.012 | 0.008 | 0.64 | 0.26 | 0.002 | 0.0041 | 0.0033 | | |
| 14 | B | 0.54 | 2.10 | 0.56 | 0.012 | 0.008 | 0.64 | 0.26 | 0.002 | 0.0041 | 0.0033 | | |
| 15 | B | 0.54 | 2.10 | 0.56 | 0.012 | 0.008 | 0.64 | 0.26 | 0.002 | 0.0041 | 0.0033 | | |
| 16 | C | 0.55 | 2.25 | 0.70 | 0.009 | 0.007 | 0.53 | 0.44 | 0.003 | 0.0032 | 0.0016 | 0.17 | |
| 17 | C | 0.55 | 2.25 | 0.70 | 0.009 | 0.007 | 0.53 | 0.44 | 0.003 | 0.0032 | 0.0016 | 0.17 | |
| 18 | C | 0.55 | 2.25 | 0.70 | 0.009 | 0.007 | 0.53 | 0.44 | 0.003 | 0.0032 | 0.0016 | 0.17 | |
| 19 | C | 0.55 | 2.25 | 0.70 | 0.009 | 0.007 | 0.53 | 0.44 | 0.003 | 0.0032 | 0.0016 | 0.17 | |
| 20 | C | 0.55 | 2.25 | 0.70 | 0.009 | 0.007 | 0.53 | 0.44 | 0.003 | 0.0032 | 0.0016 | 0.17 | |
| 21 | D | 0.67 | 1.72 | 0.94 | 0.013 | 0.010 | 0.38 | 0.18 | 0.003 | 0.0051 | 0.0030 | | |
| 22 | D | 0.67 | 1.72 | 0.94 | 0.013 | 0.010 | 0.38 | 0.18 | 0.003 | 0.0051 | 0.0030 | | |
| 23 | D | 0.67 | 1.72 | 0.94 | 0.013 | 0.010 | 0.38 | 0.18 | 0.003 | 0.0051 | 0.0030 | | |
| 24 | K | 0.87 | 1.80 | 0.93 | 0.015 | 0.009 | 0.62 | 0.15 | 0.003 | 0.0038 | 0.0013 | | |
| 25 | L | 0.77 | 2.54 | 0.89 | 0.011 | 0.010 | 0.38 | 0.11 | 0.003 | 0.0039 | 0.0018 | 0.25 | |
| 26 | M | 0.62 | 1.98 | 0.88 | 0.011 | 0.007 | 0.75 | 0.26 | 0.003 | 0.0038 | 0.0016 | 0.18 | 0.0028 |
| 27 | N | 0.61 | 2.03 | 0.92 | 0.012 | 0.009 | 0.58 | 0.56 | 0.003 | 0.0038 | 0.0022 | | |

| | | | | | | | | | | | | | |
|---|---|---|---|---|---|---|---|---|---|---|---|---|---|
| Balance: iron and inevitable impurities Unit: % by mass | | | | | | | | | | | | | |

**[Table 2]**

| | | Rolling | | | Patenting | | | Quenching | | Tempering | |
|---|---|---|---|---|---|---|---|---|---|---|---|
| Test No. | Blooming (stimulating) heating temperature [°C] | Placing temperature [°C] | Cooling rate I [°C/sec] | Cooling rate II [°C/sec] | Heating temperature [°C] | Holding time [sec] | Cooling rate [°C/sec] | Heating temperature [°C] | Holding time [sec] | Heating temperature [°C] | Holding time [sec] |
| 1 | 1,220 | 850 | 2.7 | 5.3 | 910 | 20 | 2.0 | 880 | 30 | 420 | 60 |
| 2 | 1,230 | 910 | 3.3 | 6.4 | 890 | 40 | 3.0 | 900 | 40 | 390 | 70 |
| 3 | 1,240 | 880 | 2.8 | 4.8 | 880 | 50 | 3.0 | 890 | 40 | 390 | 40 |
| 4 | 1,230 | 790 | 1.8 | 7.2 | 950 | 10 | 2.0 | 920 | 20 | 430 | 120 |
| 5 | 1,240 | 870 | 2.8 | 5.5 | 900 | 40 | 4.0 | 930 | 50 | 430 | 110 |
| 6 | 1,230 | 880 | 5.3 | 6.4 | 910 | 30 | 3.0 | 900 | 30 | 420 | 70 |
| 7 | 1,230 | 930 | 3.5 | 8.4 | 910 | 30 | 2.0 | 870 | 40 | 420 | 80 |
| 8 | 1,210 | 890 | 4.1 | 7.7 | 860 | 40 | 5.0 | 880 | 30 | 400 | 140 |
| 9 | 1,240 | 910 | 2.6 | 5.7 | 890 | 50 | 2.0 | 900 | 30 | 430 | 120 |
| 10 | 1,230 | 870 | 2.8 | 6.5 | 900 | 30 | 3.0 | 890 | 40 | 430 | 80 |
| 11 | 1,180 | 850 | 3.5 | 4.8 | 880 | 30 | 2.0 | 860 | 20 | 420 | 90 |
| 12 | 1,190 | 810 | 3.3 | 5.2 | 880 | 40 | 3.0 | 880 | 30 | 410 | 80 |
| 13 | 1,210 | 970 | 2.5 | 5.3 | - | - | - | - | - | - | - |
| 14 | 1,220 | 900 | 0.7 | 4.8 | 930 | 50 | 3.0 | 920 | 20 | 390 | 50 |
| 15 | 1,210 | 890 | 2.8 | 3.3 | 900 | 30 | 4.0 | 900 | 30 | 380 | 30 |
| 16 | 1,240 | 900 | 1.9 | 6.3 | 830 | 30 | 2.0 | 910 | 40 | 420 | 40 |
| 17 | 1,230 | 920 | 4.1 | 7.1 | 890 | 5 | 4.0 | - | - | - | - |
| 18 | 1,240 | 850 | 3.8 | 4.8 | 920 | 30 | 0.8 | 880 | 50 | 400 | 50 |
| 19 | 1,220 | 900 | 4.4 | 5.6 | 900 | 30 | 3.0 | 840 | 40 | 410 | 60 |
| 20 | 1,230 | 880 | 4.3 | 5.7 | 880 | 20 | 2.0 | 920 | 5 | 420 | 90 |
| 21 | 1,230 | 880 | 3.3 | 5.1 | 850 | 40 | 4.0 | 930 | 30 | 470 | 30 |
| 22 | 1,210 | 890 | 4.2 | 6.2 | 920 | 40 | 3.0 | 920 | 40 | 460 | 100 |
| 23 | 1,220 | 830 | 3.7 | 5.1 | 890 | 40 | 3.0 | 880 | 40 | 430 | 180 |
| 24 | 1,240 | 890 | 2.8 | 5.8 | 860 | 50 | 2.0 | 940 | 40 | 450 | 90 |
| 25 | 1,240 | 840 | 3.7 | 6.8 | 900 | 30 | 3.0 | 890 | 30 | 450 | 110 |
| 26 | 1,230 | 820 | 3.2 | 7.0 | 910 | 30 | 4.0 | 940 | 40 | 430 | 100 |
| 27 | 1,240 | 880 | 3.6 | 5.1 | 890 | 40 | 3.0 | 890 | 50 | 440 | 120 |

**[Table 3]**

| Test No. | Tensile strength [MPa] | Reduction of area [%] | Cr based carbides 0.1-0.3 µm [particles/µm²] | Cr based carbides 0.3-0.7 µm [particles/µm²] | Cr based carbides 0.7 µm or more [particles/µm²] | Nakamura-type fatigue strength [MPa] | Amount of residual γ [%] | Before and after self-diameter winding [ΔHV] |
|---|---|---|---|---|---|---|---|---|
| 1 | 2,113 | 50.8 | 0.11 | 0.0005 | 0.0005 | 950 | 8.3 | 81 |
| 2 | 2,111 | 48.3 | 0.08 | 0.0000 | 0.0000 | 950 | 10.3 | 120 |
| 3 | 2,130 | 49.8 | 0.09 | 0.0000 | 0.0000 | 1,000 | 9.4 | 83 |
| 4 | 2,146 | 51.7 | 0.07 | 0.0005 | 0.0000 | 950 | 11.5 | 119 |
| 5 | 2,144 | 50.3 | 0.14 | 0.0014 | 0.0005 | 900 | 13.2 | 124 |
| 6 | 2,109 | 50.7 | 0.08 | 0.0005 | 0.0000 | 950 | 10.1 | 95 |
| 7 | 2,115 | 48.3 | 0.16 | 0.0005 | 0.0000 | 900 | 7.1 | 91 |
| 8 | 2,124 | 48.8 | 0.13 | 0.0000 | 0.0000 | 950 | 13.8 | 121 |
| 9 | 2,148 | 50.8 | 0.18 | 0.0000 | 0.0000 | 950 | 11.1 | 117 |
| 10 | 2,138 | 52.9 | 0.08 | 0.0005 | 0.0005 | 1,000 | 12.8 | 130 |
| 11 | 2,128 | 51.5 | 0.17 | 0.0018 | 0.0018 | 750 | 9.1 | 108 |
| 12 | 2,108 | 53.8 | 0.15 | 0.0014 | 0.0014 | 800 | 11.5 | 110 |
| 13 | - | - | - | - | - | - | - | - |
| 14 | 2,108 | 49.8 | 0.16 | 0.0028 | 0.0023 | 850 | 8.9 | 81 |
| 15 | 2,118 | 46.2 | 0.24 | 0.0018 | 0.0005 | 800 | 10.5 | 92 |
| 16 | 2,138 | 47.8 | 0.22 | 0.0014 | 0.0009 | 850 | 9.2 | 81 |
| 17 | - | - | - | - | - | - | - | - |
| 18 | 2,123 | 52.4 | 0.18 | 0.0060 | 0.0041 | 750 | 11.5 | 92 |
| 19 | 2,110 | 49.2 | 0.22 | 0.0028 | 0.0005 | 750 | 12.8 | 107 |
| 20 | 2,103 | 50.7 | 0.43 | 0.0083 | 0.0009 | 700 | 9.0 | 89 |
| 21 | 2,114 | 48.5 | 0.32 | 0.0018 | 0.0005 | 800 | 4.2 | 33 |
| 22 | 2,121 | 50.1 | 0.19 | 0.0014 | 0.0009 | 700 | 4.5 | 38 |
| 23 | 2,115 | 52.9 | 0.24 | 0.0041 | 0.0005 | 800 | 3.8 | 25 |
| 24 | 2,316 | 37.1 | 0.54 | 0.0147 | 0.0005 | 700 | 13.4 | 131 |
| 25 | 2,207 | 35.1 | 0.19 | 0.0014 | 0.0009 | 750 | 8.5 | 89 |
| 26 | 2,125 | 49.5 | 0.27 | 0.0064 | 0.0037 | 800 | 12.1 | 107 |
| 27 | 2,133 | 48.2 | 0.37 | 0.0083 | 0.0028 | 750 | 10.9 | 102 |

**[Table 4]**

| | | |
|---|---|---|
| Analysis conditions (reflection method) | Item | Conditions |
| | Collimeter | ϕ300 um |
| | Angle ω | 25° - 35° Oscillation (2°/sec) |
| | Angle ϕ | -20° - +20° Oscillation (2°/sec) |
| | Measuring time (exposure) | 30 min |

These results can be explained by the following consideration. The samples of test Nos. 1 to 10 are examples that satisfy the requirements defined by the present invention. All samples had excellent fatigue-resistant characteristics.

The samples of test Nos. 11 and 12 are examples in which the blooming temperature is low. In these examples, the amount of coarse carbides having a circle equivalent diameter of 0.7 µm or more increased, thus degrading the fatigue strength.

The sample of test No. 13 is an example in which the placing temperature is high. In this example, supercooled structures were formed in the rolled material and wire breakage occurred during a shaving treatment of the rolled wire rod, so that the test was stopped.

The sample of test No. 14 is an example in which a cooling rate from the placing temperature to 600°C ("cooling rate I" in the table) was low. In this example, the amounts of Cr based carbides having a circle equivalent diameter of 0.3 µm or more and less than 0.7 µm and Cr based carbides having a circle equivalent diameter of 0.7 µm or more increased, thus degrading fatigue strength.

The sample of test No. 15 is an example in which cooling rate to 300°C after rolling ("cooling rate II" in the table) was low. In this example, the amount of Cr based carbides having a circle equivalent diameter of 0.1 µm or more and less than 0.3 µm increased, thus degrading the fatigue strength.

The sample of test No. 16 is an example in which the heating temperature during patenting is low. In this example, the amount of Cr based carbides having a circle equivalent diameter of 0.1 µm or more and less than 0.3 µm increased, thus degrading the fatigue strength.

The sample of test No. 17 is an example in which the heating and holding time during patenting is short. In this example, defective structures were formed and wire breakage occurred in the wire drawing step, so that the test was stopped.

The sample of test No. 18 is an example in which the cooling rate during patenting is low. In this example, the amounts of Cr based carbides having a circle equivalent diameter of 0.3 µm or more and less than 0.7 µm and Cr based carbides having a circle equivalent diameter of 0.7 µm or more increased, thus degrading the fatigue strength.

The sample of test No. 19 is an example in which the heating temperature during quenching is low. In this example, the amounts of Cr based carbides having a circle equivalent diameter of 0.1 µm or more and less than 0.3 µm and Cr based carbides having a circle equivalent diameter of 0.3 µm or more and less than 0.7 µm increased, thus degrading the fatigue strength.

The sample of test No. 20 is an example in which the holding time during quenching is short. In this example, the amounts of Cr based carbides having a circle equivalent diameter of 0.1 µm or more and less than 0.3 µm and Cr based carbides having a circle equivalent diameter of 0.3 µm or more and less than 0.7 µm increased, thus degrading the fatigue strength.

The sample of test No. 21 is an example in which the tempering temperature is high. In this example, Cr based carbides having a circle equivalent diameter of 0.1 µm or more and less than 0.3 µm increased, thus degrading the fatigue strength. The amount of residual γ was also small.

The sample of test No. 22 is an example in which the tempering temperature is high. In this example, the hardness after coiling slightly increases because of a small amount of residual γ, thus failing to obtain a high-strength spring.

In the sample of test No. 23, the holding time of tempering was long. In this example, the amounts of Cr based carbides having a circle equivalent diameter of 0.1 µm or more and less than 0.3 µm and Cr based carbides having a circle equivalent diameter of 0.3 µm or more and less than 0. 7 µm increased, thus degrading the fatigue strength. The amount of residual γ was also small.

The sample of test No. 24 is an example in which the C content is large. In this example, the tensile strength was high and the reduction of area was low. The amounts of Cr based carbides having a circle equivalent diameter of 0.1 µm or more and less than 0.3 um and Cr based carbides having a circle equivalent diameter of 0.3 µm or more and less than 0.7 µm increased, thus degrading the fatigue strength.

The sample of test No. 25 is an example in which the Si content is high. In this example, the tensile strength was high and the reduction of area was low. The toughness and ductility were inferior and the fatigue strength degraded.

The sample of test No. 26 is an example in which the Cr content is high. In this example, Cr based carbides increased, thus degrading the fatigue strength.

The sample of test No. 27 is an example in which the V content is high. In this example, the amount of composite carbides of Cr and V increased, thus degrading the fatigue strength.

## Claims

1. A heat-treated steel wire having excellent fatigue-resistance characteristics, comprising, in % by mass:
C: 0.5 to 0.8%,
Si: 1.0 to 2.50%,
Mn: 0.5 to 1.5%,
P: more than 0% and 0.02% or less,
S: more than 0% and 0.02% or less,
Cr: 0.3 to 0.7%,
V: 0.05 to 0.5%,
Al: more than 0% and 0.01% or less,
N: more than 0% and 0.007% or less, and
0: more than 0% and 0.004% or less, with the balance being iron and inevitable impurities, wherein
the heat-treated steel wire includes, in a tempered martensite structure at a depth of 0.3 mm from a surface layer:
Cr based carbides having a circle equivalent diameter of 0.1 µm or more and less than 0.3 µm in 0.20 particles/µm² or less,
Cr based carbides having a circle equivalent diameter of 0.3 µm or more and less than 0.7 µm in 0.002 particles/µm² or less, and
Cr based carbides having a circle equivalent diameter of 0.7 µm or more in 0.0010 particles/µm² or less, and wherein
the amount of residual austenite exceeds 5% and 15% or less in terms of a volume ratio.

2. The heat-treated steel wire according to claim 1, further comprising, in % by mass, at least one of the following (a) and (b) :
(a) Ni: more than 0% and 0.3% or less, and
(b) B: more than 0% and 0.01% or less.

3. A spring obtained by using the heat-treated steel wire according to claim 1 or 2.
